(19) Europäisches Patentamt / European Patent Office / Office européen des brevets

(11) **EP 4 563 395 A1**

(12) **EUROPEAN PATENT APPLICATION**
published in accordance with Art. 153(4) EPC

(43) Date of publication:
04.06.2025 Bulletin 2025/23

(21) Application number: 23869982.1

(22) Date of filing: 03.08.2023

(51) International Patent Classification (IPC):
*B60L 15/20* (2006.01)   *H02P 23/00* (2016.01)
*H02P 27/06* (2006.01)   *H02P 29/40* (2016.01)

(52) Cooperative Patent Classification (CPC):
Y02T 10/72

(86) International application number:
PCT/CN2023/111025

(87) International publication number:
WO 2024/066736 (04.04.2024 Gazette 2024/14)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.09.2022 CN 202211214393

(71) Applicant: **Huawei Digital Power Technologies Co., Ltd.**
**Shenzhen, Guangdong 518043 (CN)**

(72) Inventor: **YANG, Peng**
**Shenzhen, Guangdong 518043 (CN)**

(74) Representative: **Gill Jennings & Every LLP**
**The Broadgate Tower**
**20 Primrose Street**
**London EC2A 2ES (GB)**

(54) **CONTROLLER OF ELECTRIC MOTOR CONTROL MODULE, CONTROL METHOD FOR ELECTRIC MOTOR, AND RELATED DEVICE**

(57)     A controller of a motor control module, a motor control method, and a related device are provided. A communication end of the controller (1011, 3011, and 4011) is connected to an assisted driving controller (203, 302, and 402) or an autonomous driving controller (204, 303, and 403). The controller (1011, 3011, and 4011) receives a target speed and a target acceleration that are sent by the assisted driving controller (203, 302, and 402) or the autonomous driving controller (204, 303, and 403).

An output end of the controller (1011, 3011, and 4011) is connected to an inverter circuit (1012, 3012, and 4012) in the motor control module. In this case, in response to a speed adjustment signal, the controller (1011, 3011, and 4011) controls the inverter circuit (1012, 3012, and 4012) to adjust a current output to a first motor (1013, 3013, and 4013). In this way, a control delay of assisted driving or autonomous driving can be reduced, thereby achieving good safety.

Electric drive system 101

FIG. 2

## Description

This application claims priority to Chinese Patent Application No. 202211214393.7, filed with the China National Intellectual Property Administration on September 30, 2022 and entitled "CONTROLLER OF MOTOR CONTROL MODULE, MOTOR CONTROL METHOD, AND RELATED DEVICE", which is incorporated herein by reference in its entirety.

## TECHNICAL FIELD

This application relates to the field of new energy vehicles, and in particular, to a controller of a motor control module, a motor control method, and a related device.

## BACKGROUND

Currently, driving automation includes assisted driving and autonomous driving. The assisted driving provides assistance support in a process of driving a vehicle by a driver, to help the driver drive the vehicle on a road more easily. The autonomous driving means that a vehicle can autonomously travel on a road in a manner of being rarely or never driven by a driver.

In both the assisted driving and the autonomous driving, various sensors such as radars, lasers, sonars, and cameras are used to sense a surrounding environment of the vehicle, and a driving path of the vehicle is controlled based on the surrounding environment of the vehicle and a status of the vehicle. Because of a specific control delay from sensing of the surrounding environment of the vehicle to controlling of the specific driving path of the vehicle, the vehicle is prone to a collision. Therefore, how to reduce the control delay in assisted driving or autonomous driving is a key to research.

## SUMMARY

This application provides a controller of a motor control module, a motor control method, and a related device, to reduce a control delay of assisted driving or autonomous driving, thereby achieving good safety.

According to a first aspect, an embodiment of this application provides a controller of a motor control module, where a communication end of the controller is connected to an assisted driving controller or an autonomous driving controller, and the controller receives a speed adjustment signal sent by the assisted driving controller or the autonomous driving controller.

An output end of the controller is connected to an inverter circuit in the motor control module, and in response to the speed adjustment signal, the controller controls the inverter circuit to adjust a current output to a first motor.

In embodiments of this application, the controller may directly communicate with the assisted driving controller or the autonomous driving controller, and receive the speed adjustment signal sent by the assisted driving controller or the autonomous driving controller. In addition, the controller may control the output current of the inverter circuit based on the speed adjustment signal, to quickly control an output torque of the first motor. In embodiments of this application, a control delay of assisted driving or autonomous driving can be reduced, thereby achieving good safety.

With reference to the first aspect, in a first possible implementation, the speed adjustment signal includes a target speed and a target acceleration; and that in response to the speed adjustment signal, the controller controls the inverter circuit to adjust a current output to a first motor is specifically implemented as follows:
The controller controls, based on the target speed and the target acceleration, the current output by the inverter circuit to the first motor to be a first target current.

With reference to the first possible implementation of the first aspect, in a second possible implementation, that the controller controls, based on the target speed and the target acceleration, the current output by the inverter circuit to the first motor to be a first target current is specifically implemented as follows:
The controller calculates a target torque based on the target speed and the target acceleration.

The controller controls, based on the target torque and a relationship between a torque and a current, the current output by the inverter circuit to the first motor to be the first target current.

In embodiments of this application, the controller may directly receive the target speed and the target acceleration that are sent by the assisted driving controller or the autonomous driving controller, to directly calculate the target torque of the vehicle. In addition, the controller may directly control the output current of the inverter circuit based on a result obtained through calculation, to quickly control the output torque of the first motor. In embodiments of this application, a control delay of assisted driving or autonomous driving can be reduced, thereby achieving good safety.

With reference to the first aspect or with reference to any one of the foregoing possible implementations of the first aspect, in a third possible implementation, the communication end of the controller is further connected to a secondary controller. In addition, in response to the speed adjustment signal, the controller further controls the secondary controller to adjust a current that is output by an inverter circuit connected to the secondary controller to a second motor. During specific implementation, the controller may send a compensation signal to the secondary controller. In this case, the secondary controller controls, based on the compensation signal, the current output by the inverter circuit connected to the secondary controller to the second motor. For example, in this case, the output current of the inverter circuit connected to the secondary controller may be a second target current.

In embodiments of this application, the controller may communicate with the secondary controller. Embodiments of this application may be applied to a vehicle including two motors.

With reference to the first aspect or with reference to any one of the foregoing possible implementations of the first aspect, in a fourth possible implementation, the input end of the controller is configured to receive a brake signal. When receiving the brake signal, the controller indicates the assisted driving controller or the autonomous driving controller to stop sending the speed adjustment signal; or when receiving the brake signal, the controller stops responding to the speed adjustment signal sent by the assisted driving controller or the autonomous driving controller.

With reference to the first aspect or with reference to any one of the foregoing possible implementations of the first aspect, in a fifth possible implementation, the input end of the controller is configured to receive an acceleration signal. In this case, that in response to the speed adjustment signal, the controller controls the inverter circuit to adjust a current output to a first motor is specifically implemented as:

In response to the speed adjustment signal and the received acceleration signal, the controller controls the inverter circuit to adjust the current output to the first motor. For example, in this case, the current output by the inverter circuit to the first motor may be a third target current.

With reference to the first aspect or with reference to any one of the foregoing possible implementations of the first aspect, in a sixth possible implementation, the communication end of the controller is configured to connect to a vehicle control unit, and the controller may receive a torque signal sent by the vehicle control unit.

That in response to the speed adjustment signal, the controller controls the inverter circuit to adjust a current output to a first motor is specifically implemented as follows: In response to the speed adjustment signal and the torque signal sent by the vehicle control unit, the controller controls the inverter circuit to adjust the current output to the first motor.

With reference to the first aspect or with reference to any one of the foregoing possible implementations of the first aspect, in a seventh possible implementation, the input end of the controller is configured to connect to a battery management system, and the controller may receive a power signal sent by the battery management system.

That in response to the speed adjustment signal, the controller controls the inverter circuit to adjust a current output to a first motor is specifically implemented as follows: In response to the speed adjustment signal and the power signal sent by the battery management system, the controller controls the inverter circuit to adjust the current output to the first motor.

In embodiments of this application, the controller in the motor control module is directly connected to the battery management system, to quickly respond to an input of the battery management system. In embodiments of this application, a control delay of assisted driving or autonomous driving can be further improved, to quickly control the first motor, thereby achieving good safety.

With reference to the first aspect or with reference to any one of the first possible implementation to the sixth possible implementation of the first aspect, in an eighth possible implementation, the input end of the controller is configured to connect to an electronic stability program, and the controller may receive a torque signal sent by the electronic stability program.

That in response to the speed adjustment signal, the controller controls the inverter circuit to adjust a current output to a first motor is specifically implemented as follows: In response to the speed adjustment signal and the torque signal sent by the electronic stability program, the controller controls the inverter circuit to adjust the current output to the first motor.

In embodiments of this application, the controller in the motor control module is directly connected to the electronic stability program, to quickly respond to an input of the electronic stability program. In embodiments of this application, a control delay of assisted driving or autonomous driving can be further improved, to quickly control the first motor, thereby achieving good safety.

With reference to the first aspect or with reference to any one of the first possible implementation to the sixth possible implementation of the first aspect, in a ninth possible implementation, the input end of the controller is configured to connect to a thermal management system, and the controller may receive a power signal sent by the thermal management system.

That in response to the speed adjustment signal, the controller controls the inverter circuit to adjust a current output to a first motor is specifically implemented as follows: In response to the speed adjustment signal and the power signal sent by the thermal management system, the controller controls the current output by the inverter circuit to the first motor.

In embodiments of this application, the controller in the motor control module is directly connected to the thermal management system, to quickly respond to an input of the thermal management system. In embodiments of this application, a control delay of assisted driving or autonomous driving can be further improved, to quickly control the first motor, thereby achieving good safety.

According to a second aspect, an embodiment of this application provides a motor control method, where the control method is performed by a controller in a motor control module, a communication end of the controller is connected to an assisted driving controller or an autonomous driving controller, and an output end of the controller is connected to an inverter circuit in the motor control module.

During specific implementation, the controller receives a speed adjustment signal sent by the assisted driving controller or the autonomous driving controller, where the speed adjustment signal includes a target speed and a target acceleration; calculates a target torque based on the target speed and the target acceleration; and controls, based on the target torque and a relationship between a torque and a current, a current output by the inverter circuit to a first motor to be a first target current.

With reference to the second aspect, in a first possible implementation, that the controller controls, based on the target torque, a current output by the inverter circuit to a first motor to be a first target current is specifically implemented as follows:

In response to that the target torque is less than or equal to a limited torque, the controller controls, based on the target torque, the output current of the inverter circuit to be the first target current.

With reference to the second aspect or with reference to the first possible implementation of the second aspect, in a second possible implementation, the communication end of the controller is connected to a secondary controller.

During specific implementation, the controller divides the target torque obtained through calculation into a first target sub-torque and a second target sub-torque; and the controller controls, based on the first target sub-torque and the relationship between a torque and a current, the output current of the inverter circuit to be a third target current.

The controller further sends a compensation request to the secondary controller, where the compensation request is used to indicate the secondary controller to control, based on the second target sub-torque, an inverter circuit connected to the secondary controller to output a second target current.

With reference to the second possible implementation of the second aspect, in a third possible implementation, that the controller divides the target torque into a first target sub-torque and a second target sub-torque is specifically implemented as follows:

The controller divides the target torque into the first target sub-torque and the second target sub-torque in response to that the target torque is greater than the limited torque. To be specific, in embodiments of this application, when the first motor cannot independently output the target torque, the controller may request the secondary controller to perform torque compensation.

With reference to the second aspect or with reference to any one of the foregoing possible implementations of the second aspect, in a fourth possible implementation, an input end of the controller is configured to receive a brake signal.

During specific implementation, when receiving the brake signal, the controller indicates the assisted driving controller or the autonomous driving controller to stop sending the speed adjustment signal.

With reference to the second aspect or with reference to any one of the foregoing possible implementations of the second aspect, in a fifth possible implementation, the input end of the controller is configured to receive an acceleration signal.

During specific implementation, the controller calculates an input torque of a driver based on the acceleration signal.

When the input torque of the driver is greater than the target torque, the controller further controls, based on the input torque of the driver, the target torque, and the relationship between a torque and a current, the output current of the inverter circuit to be the third target current. In this case, the first motor outputs a sum of the input torque of the driver and the target torque.

With reference to the fifth possible implementation of the second aspect, in a sixth possible implementation, that the controller controls the output current of the inverter circuit to be the third target current is specifically implemented as follows:

When the sum of the input torque of the driver and the target torque is less than or equal to the limited torque, the controller controls the output current of the inverter circuit to be the third target current.

With reference to the first possible implementation to the sixth possible implementation of the second aspect, in a seventh possible implementation, the communication end of the controller is further connected to a vehicle control unit. Before responding to that the target torque is less than or equal to the limited torque, the controller receives a torque sent by the vehicle control unit, and uses the torque sent by the vehicle control unit as the limited torque.

With reference to the first possible implementation to the sixth possible implementation of the second aspect, in an eighth possible implementation, the input end of the controller is connected to a battery management system.

Before responding to that the target torque is less than or equal to the limited torque, the controller receives limited power sent by the battery management system, and calculates the limited torque based on the limited power of the battery management system.

With reference to the first possible implementation to the sixth possible implementation of the second aspect, in a ninth possible implementation, the input end of the controller is connected to an electronic stability program.

Before responding to that the target torque is less than or equal to the limited torque, the controller receives a torque sent by the electronic stability program, and uses the torque sent by the electronic stability program as the limited torque.

With reference to the first possible implementation to the sixth possible implementation of the second aspect, in a tenth possible implementation, the input end of the controller is connected to a thermal management system.

Before responding to that the target torque is less than or equal to the limited torque, the controller receives limited power sent by the thermal management system, and calculates the limited torque based on the limited power of the thermal management system.

With reference to the second aspect or with reference to any one of the foregoing possible implementations of the second aspect, in an eleventh possible implementation, when the inverter circuit outputs the first target current to the first motor, the first motor outputs a first torque.

That the controller receives a speed adjustment signal sent by the assisted driving controller or the autonomous driving controller is specifically implemented as: receiving, according to a preset periodicity, the speed adjustment signal sent by the assisted driving controller or the autonomous driving controller.

The controlling, based on the target torque, a current output by the inverter circuit to a first motor to be a first target current is specifically implemented as: in the preset periodicity, controlling, based on the first torque and the target torque, the current output by the inverter circuit to the first motor to be a fifth target current.

With reference to the eleventh possible implementation of the second aspect, in a twelfth possible implementation, when the inverter circuit outputs the fifth target current to the first motor, the first motor outputs a second torque.

The first torque is in a first preset interval of the target torque, the second torque is in a second preset interval of the target torque, and a range of the second preset interval is less than a range of the first preset interval. In other words, in embodiments of this application, in a periodicity in which the assisted driving controller or the autonomous driving controller sends the target speed and the target acceleration, the output current of the inverter circuit may be adjusted for a plurality of times, so that the second torque output by the first motor is closer to the target torque, thereby achieving a smoother torque change, better reliability, and higher safety.

With reference to the second aspect or any one of the possible implementations of the second aspect, in a thirteenth possible implementation, that the controller calculates a target torque based on the target speed and the target acceleration is specifically implemented as follows:

The controller calculates the target torque based on the target speed and the target acceleration when a vehicle is in an assisted driving mode or an autonomous driving mode.

According to a third aspect, an embodiment of this application provides an electric drive system, where the electric drive system includes a motor control module and a first motor, and the motor control module includes an inverter circuit and the controller with reference to the first aspect or any one of the foregoing possible implementations of the first aspect.

According to a fourth aspect, an embodiment of this application provides a vehicle, where the vehicle includes a power battery and the electric drive system described with reference to the third aspect, and the power battery is connected to an input end of an inverter circuit.

It should be understood that mutual reference may be made to the implementations and beneficial effects of the foregoing aspects of this application.

## BRIEF DESCRIPTION OF DRAWINGS

FIG. 1 is a diagram of a scenario of a vehicle according to an embodiment of this application;
FIG. 2 is a block diagram of a structure of an electric drive system according to an embodiment of this application;
FIG. 3 is a block diagram of a structure of a vehicle according to an embodiment of this application; and
FIG. 4 is a block diagram of another structure of a vehicle according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Technical solutions of this application are further described below in detail with reference to the accompanying drawings.

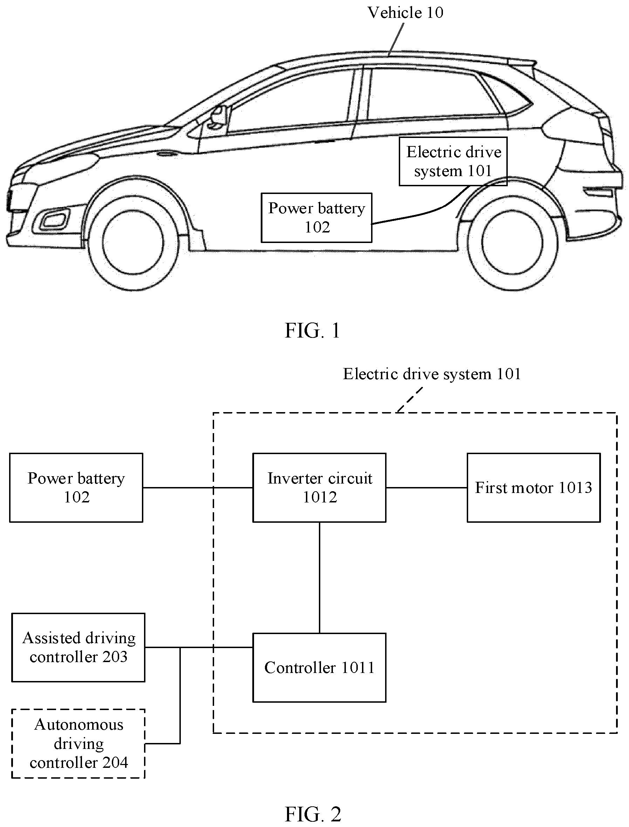

FIG. 1 is a diagram of a scenario of a vehicle according to an embodiment of this application. As shown in FIG. 1, a vehicle 10 includes an electric drive system 101 and a power battery 102 connected to the electric drive system 101. The power battery 102 provides a power supply to the electric drive system 101.

A structure of the electric drive system 101 may be shown in FIG. 2. The electric drive system 101 includes a controller 1011, an inverter circuit 1012, and a first motor 1013.

A communication end of the controller 1011 is connected to an assisted driving controller 203 or an autonomous driving controller 204. In this case, the controller 1011 may establish communication with the assisted driving controller 203 or the autonomous driving controller 204, to be specific, the controller 1011 may directly receive a signal from the assisted driving controller 203 or the autonomous driving controller 204, or may send a signal to the assisted driving controller 203 or the autonomous driving controller 204.

The controller 1011, the assisted driving controller 203, or the autonomous driving controller 204 may be specifically implemented as a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. That is, product forms of the controller 1011, the assisted driving controller 203, and the autonomous driving controller 204 may be the same. A difference lies in that the controller 1011 is a controller that can directly control an output torque of the first motor 1013, and the assisted driving controller 203 or the autonomous driving controller 204 each are a controller that receives information of various sensors and processes the information of the sensors.

An output end of the controller 1011 is connected to a control end of the inverter circuit 1012, an input end of the inverter circuit 1012 is connected to the power battery 102, and an output end of the inverter circuit 1012 is connected to the first motor 1013. During specific implementation, the controller 1011 receives the signal sent by the assisted driving controller 203 or the autonomous driving controller 204, and controls an output current of the inverter circuit 1012 based on the signal sent by the assisted driving controller 203 or the autonomous driving controller 204, to control the output torque of the first motor 1013.

It should be noted that a port type in the controller 1011 may include but is not limited to the input end, the output end, and the communication end. The input end, the output end, or the communication end in this application may be specifically implemented as any one of a plurality of ports. In addition, one port may alternatively both have input, output, and communication functions. In this case, at least one of the input end, the output end, and the communication end in this application may be specifically implemented as a same port. In other words, in this embodiment of this application, connections between the communication end, the output end, and the input end and other components are merely divided by function, and are not limited to specific ports in actual production application.

For example, the inverter circuit 1012 may be a three-phase two-level inverter, a three-phase three-level inverter, or a three-phase multi-level inverter. That is, a specific implementation of the inverter circuit 1012 is not limited in embodiments of this application, provided that a direct current output by the power battery 102 can be converted into an alternating current for driving the first motor 1013.

The following describes, with reference to the accompanying drawings, how the controller in embodiments of this application specifically controls the output current of the inverter circuit, to control the output torque of the motor.

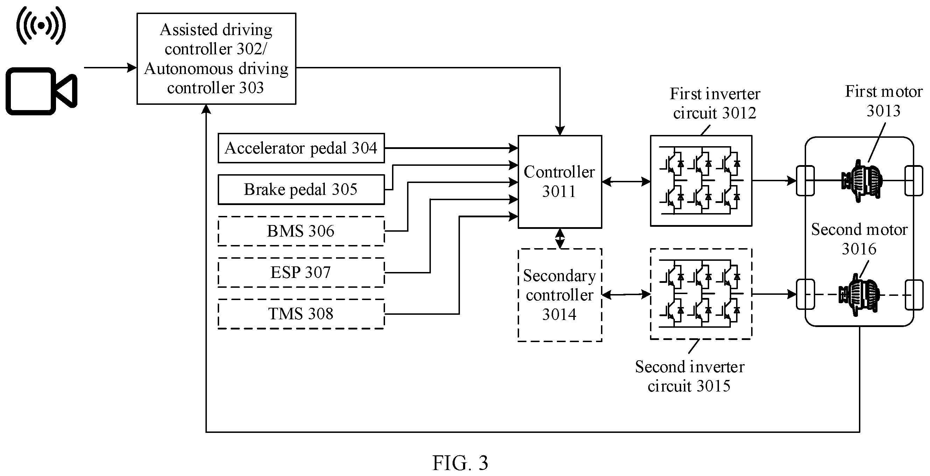

In an embodiment, as shown in FIG. 3, FIG. 3 is a block diagram of a structure of a vehicle according to an embodiment of this application. As shown in FIG. 3, the vehicle may include a controller 3011, a first inverter circuit 3012, a first motor 3013, and an assisted driving controller 302/autonomous driving controller 303. For example, in FIG. 3, an example in which the first inverter circuit 3012 is specifically implemented as a three-phase two-level inverter is used.

As shown in FIG. 3, the controller 3011 provided in this embodiment of this application may directly simultaneously or separately receive one or more of a speed adjustment signal sent by the assisted driving controller 302/autonomous driving controller 303, an acceleration signal triggered by an accelerator pedal 304, a brake signal triggered by a brake pedal 305, a power signal sent by a BMS 306, a torque signal sent by an ESP 307, and a power signal sent by a TMS 308, and correspondingly control the first inverter circuit 3012 to adjust a current output to the first motor 3013. The controller 3011 provided in this embodiment of this application may directly receive one or more signals sent or triggered by the assisted driving controller 302/autonomous driving controller 303, the accelerator pedal 304, the brake pedal 305, the BMS 306, the ESP 307, or the TMS 308, so that the controller 3011 can quickly control the output torque of the first motor by controlling the output current of the inverter circuit based on the signal/signals, thereby reducing a control delay and improving safety.

In embodiments of this application, an input end of the assisted driving controller 302 or an input end of the autonomous driving controller 303 is connected to a plurality of types of sensors, such as a camera, a laser, and a radar. The assisted driving controller 302 or the autonomous driving controller 303 may calculate a speed adjustment signal of the vehicle based on a signal sensed by the sensor.

It may be understood that if the vehicle includes the assisted driving controller 302, the vehicle may implement assisted driving; or if the vehicle includes the autonomous driving controller 303, the vehicle may implement autonomous driving.

A communication end of the assisted driving controller 302 or a communication end of the autonomous driving controller 303 is connected to a communication end of the controller 3011. In this case, the assisted driving controller 302 or the autonomous driving controller 303 may send the speed adjustment signal of the vehicle to the controller 3011.

For example, the speed adjustment signal of the vehicle includes a target speed and a target acceleration. In this case, the assisted driving controller 302 or the autonomous driving controller 303 may calculate the target speed and the target acceleration based on the signal sensed by the sensor, for example, an obstacle around the vehicle, a distance between the vehicle and a vehicle in front of the vehicle, and a vehicle speed of the vehicle in front of the vehicle. For a specific calculation manner, refer to the conventional technology. Details are not described herein.

In addition, the assisted driving controller 302 or the autonomous driving controller 303 sends the target speed and the target acceleration that are obtained through calculation to the controller 3011. In this case, the controller 3011 calculates a target torque based on the target speed and the target acceleration.

During specific implementation, the controller 3011 calculates, based on a vehicle traveling resistance model by using the target speed and the target acceleration, a total traveling resistance of vehicle traveling, and then calculates the target torque based on a moment of force relationship.

Optionally, the controller 3011 calculates the target torque based on the target speed and the target acceleration in response to that the vehicle is in an assisted driving mode or an autonomous driving mode. For example, if an assisted driving button or an autonomous driving button is pressed, the assisted driving controller 302 or the autonomous driving controller 303 is activated, and information indicating that the assisted driving button is pressed or information indicating that the autonomous driving button is activated is sent to the controller 3011, to trigger the controller 3011 to calculate the target torque based on the target speed and the target acceleration. For example, the assisted driving controller 302 or the autonomous driving controller 303 may send the target speed, the target acceleration, and a button status together to the controller 3011 in a packaged manner. The button status may be 0 or 1 to indicate whether the button is pressed.

The total resistance F of vehicle traveling is a sum of a rolling resistance $F_f$, an air resistance $F_w$, and a gradient resistance $F_j$, and may be expressed by using the following formula:

$$\mathrm{F} = F_f + F_w + F_j \quad \text{Formula 1}$$

The controller 3011 calculates the rolling resistance $F_f$ based on a vehicle gravity G and a rolling resistance coefficient f, and a formula is expressed as follows:

$$F_f = G.f \quad \text{Formula 2}$$

The rolling resistance coefficient f is related to a pavement type and is a function of a vehicle speed.

The controller 3011 calculates the air resistance $F_w$ based on a speed $u_r$ of the vehicle relative to wind, an air resistance coefficient $C_D$, and a windward area A of the vehicle, and a formula is expressed as follows:

$$F_w = \frac{C_D A u_r^2}{k} \quad \text{Formula 3}$$

Herein, k is a constant.

The controller 3011 calculates the gradient resistance $F_j$ based on the vehicle gravity G, a gradient angle $F_j$, a rotation mass conversion coefficient $F_j$, a vehicle mass M, and an acceleration $dv/dt$ of the vehicle, and a formula is expressed as follows:

$$F_j = \mathrm{G} sin\alpha + \delta.\mathrm{M}.\frac{dv}{dt} \quad \text{Formula 4}$$

In addition, the moment of force relationship may be expressed by using the following formula:

$$T = r \times F \quad \text{Formula 5}$$

Herein, *T* is a torque, and r is a constant.

The controller 3011 substitutes the target speed into Formula 2 and Formula 3 to respectively obtain a target rolling resistance and a target air resistance through calculation, and substitutes the target acceleration into the Formula 4 to obtain a target gradient resistance through calculation, to determine a total resistance applied to the vehicle in a target driving state. Then, the controller 3011 converts the total resistance applied to the vehicle in the target driving state into the target torque of the vehicle according to Formula 5.

The controller 3011 calculates, based on the target torque of the vehicle and a relationship between a torque and a current, a first target current corresponding to the target torque. The relationship between a torque and a current is represented as follows:

$$T = \frac{9550UI}{n} \quad \text{Formula 6}$$

U is an operating voltage of the first motor 3013, namely, a voltage of the power battery; and n is a rotation speed of the first motor 3013.

The controller 3011 controls connection or disconnection of each switching transistor in the first inverter circuit 3012, so that an output current of the first inverter circuit 3012 is the first target current. In this case, the first motor 3013 outputs a first torque.

It should be explained that although the target torque corresponds to the first target current, the controller 3011 specifically controls the output current of the first inverter circuit 3012, that is, the torque is output by the first motor 3013, and the first target current is output by the first inverter circuit 3012. Because control precision of the controller 3011 is limited, the current for the first motor 3013 may be greater than or less than the first target current, and the first torque output by the first motor 3013 may be greater than or less than the target torque.

For example, the first torque is in a first preset interval of the target torque. For example, the target torque is 50 N. In this case, the first torque output by the first motor 3013 may be any one in an interval from 49 N to 51 N.

In embodiments of this application, the controller may directly receive the target speed and the target acceleration that are sent by the assisted driving controller or the autonomous driving controller, to directly calculate the target torque of the vehicle. In addition, the controller may directly control the output current of the inverter circuit based on a result obtained through calculation, to quickly control the output torque of the first motor. In embodiments of this application, a control delay of assisted driving or autonomous driving can be reduced, thereby achieving good safety.

In an embodiment, the assisted driving controller 302 or the autonomous driving controller 303 sends the target speed and the target acceleration to the controller 3011 according to a preset periodicity. However, duration in which the controller 3011 calculates the target torque and the first target current is shorter than duration of the preset periodicity. Therefore, in the preset periodicity, the controller 3011 may further control the output current of the first inverter circuit 3012 based on the first torque output by the first motor 3013 and the target torque, so that the first motor 3013 outputs a second torque.

In this case, the second torque output by the first motor 3013 is in a second preset interval of the target torque, and a range of the second preset interval is less than a range of the first preset interval. In other words, in embodiments of this application, in a periodicity in which the assisted driving controller 302 or the autonomous driving controller 303 sends the target speed and the target acceleration, the output current of the first inverter circuit 3012 may be calculated and controlled for a plurality of times, so that the second torque output by the first motor 3013 is closer to the target torque, thereby achieving a smoother torque change, better reliability, and higher safety.

For example, the assisted driving controller 302 or the autonomous driving controller 303 may send the target speed and the target acceleration to the controller 3011 through a CAN bus, and the preset periodicity may be, for example, 10 ms. Duration in which the controller 3011 performs calculation is, for example, 2 ms. In this case, the controller 3011 may obtain the target torque and the first target current through calculation in 2 ms after receiving the target speed and the target acceleration. Because a target speed and a target acceleration in a next periodicity are not sent to the controller 3011 yet, the controller 3011 may collect an actual current of the first motor 3013, and obtain, through conversion according to Formula 6 based on the actual current of the first motor 3013, the first torque output by the first motor 3013.

The controller 3011 may control, based on a result of comparison between the first torque output by the first motor 3013 and the target torque, the output current of the first inverter circuit 3012 to be a second target current, so that the first motor 3013 outputs the second torque. In this case, compared with the first torque, the second torque may be closer to the target torque.

For example, within duration of the preset periodicity of 10 ms, the controller 3011 may control the output current of the first inverter circuit 3012 for five times, so that the torque output by the first motor 3013 is closer to the target torque.

In an embodiment, the electric drive system may include at least two motors, for example, the first motor 3013 and a second motor 3016. In this case, the second motor 3016 is connected to an output end of a second inverter circuit 3015, a control end of the second inverter circuit 3015 is connected to an output end of a secondary controller 3014, and a communication end of the secondary controller 3014 is connected to the communication end of the controller 3011.

During specific implementation, the controller 3011 divides the calculated target torque into a first target sub-torque and a second target sub-torque. For example, the controller 3011 may allocate the target torque based on a motor parameter of the first motor 3013 and a motor parameter of the second motor 3016. The motor parameter includes maximum output power, a maximum output torque, and the like. For example, torque allocation is performed based on a ratio of maximum output power of the first motor 3013 to maximum output power of the second motor 3016. For example, if the maximum output power of the first motor 3013 is 300 W, the maximum output torque of the second motor 3016 is 150 W, and the target torque is 600 N, the controller 3011 may determine that the first target sub-torque is 400 N, and the second target sub-torque is 200 N.

After determining the first target sub-torque and the second target self-torque, the controller 3011 may obtain, through calculation based on the relationship between a torque and a current, that is, according to Formula 6, a fourth target current corresponding to the first target sub-torque and the second target current corresponding to the second target sub-torque.

The controller 3011 controls, based on the first target sub-torque, the output current of the first inverter circuit 3012 to be the fourth target current, and the first motor 3013 outputs a third torque.

In addition, the controller 3011 may control the secondary controller 3014 to adjust a current output by the inverter circuit connected to the secondary controller 3014 to the second motor 3016. During specific implementation, the controller 3011 sends a compensation request to the secondary controller 3014, where the compensation request carries the second target sub-torque. When receiving the torque compensation request, the secondary controller 3014 controls an output current of the second inverter circuit 3015 based on the second target sub-torque, so that the second motor 3016 corresponding to the secondary controller 3014 outputs a fourth torque.

In embodiments of this application, the controller may communicate with the secondary controller, and the controller may perform torque allocation on the first motor and the second motor. Embodiments of this application may be applied to a vehicle including two motors.

Optionally, when the target torque is greater than a limited torque, the controller 3011 divides the target torque into the first target sub-torque and the second target sub-torque. The limited torque may be a preset value, or a value received by the controller 3011. A value of the limited torque is related to factors like a temperature of the power battery of the vehicle, power of the power battery of the vehicle, and a slip rate of the vehicle. To be specific, in embodiments of this application, when the first motor 3013 cannot independently output the target torque, the controller 3011 may request the secondary controller 3014 to perform torque compensation.

In an embodiment, the vehicle further includes a brake pedal 305, and the brake pedal 305 is connected to an input end of the controller 3011. When detecting a brake signal, the controller 3011 indicates the assisted driving controller 302 or the autonomous driving controller 303 to stop sending the speed adjustment signal. In this case, it may be understood that the vehicle exits the assisted driving mode or the autonomous driving mode. Alternatively, when detecting a brake signal, the controller 3011 stops responding to the speed adjustment signal sent by the assisted driving controller 302 or the autonomous driving controller 303. In other words, it may be understood as that the speed adjustment signal sent by the assisted driving controller 302 or the autonomous driving controller 303 is invalid.

It may be understood that the brake signal is a signal obtained when the brake pedal 305 is stepped to a specific degree. For example, the brake pedal 305 detects, through resistance voltage division, a degree to which the brake pedal 305 is stepped, and the controller 3011 determines, by collecting a value of a corresponding divided resistance voltage, the degree to which the brake pedal 305 is stepped. When the brake pedal 305 is stepped to a specific degree, that is, the corresponding divided resistance voltage is greater than or less than a preset voltage threshold, the controller 3011 indicates the assisted driving controller 302 or the autonomous driving controller 303 to stop sending the target speed and the target acceleration.

In an embodiment, the vehicle further includes an accelerator pedal 304, and the accelerator pedal 304 is connected to the input end of the controller 3011. In this case, the controller 3011 may receive an acceleration signal, and the acceleration signal is determined based on position information of the accelerator pedal 304. The controller 3011 calculates an input torque of a driver based on the acceleration signal, and when the input torque of the driver is greater than the target torque, the controller 3011 adds the input torque of the driver on the basis of the target torque.

During specific implementation, the controller 3011 may obtain the corresponding fourth target current through calculation based on the input torque of the driver and the target torque, and based on the relationship between a torque and a current, that is, according to Formula 6. In this case, the controller 3011 may control, based on the input torque of the driver and the target torque, the output current of the first inverter circuit 3012 to be a third target current, and the first motor 3013 outputs a sum of the input torque of the driver and the target torque.

Optionally, the controller 3011 controls the output current of the first inverter circuit 3012 to be the fourth target current in response to that a sum of the input torque of the driver and the target torque is less than or equal to a limited torque. The limited torque may be a preset value, or a value received by the controller 3011. A value of the limited torque is related to factors like a temperature of the power battery of the vehicle, power of the power battery of the vehicle, and a slip rate of the vehicle. To be specific, in embodiments of this application, when the first motor 3013 can independently provide the target torque and the input torque of the driver, the controller 3011 controls the output current of the first inverter circuit 3012, so that the first motor 3013 outputs the sum of the input torque of the driver and the target torque.

In an embodiment, the vehicle further includes a battery management system (Battery Management System, BMS) 306, and the BMS 306 is connected to the input end of the controller 3011. The controller 3011 receives a power signal sent by the BMS 306, where the power signal sent by the BMS 306 carries limited power of the BMS 306, and the limited power of the BMS 306 is related to the temperature, remaining power, and the like of the power battery. The controller 3011 may obtain the limited torque through calculation according to Formula 6. In this case, the controller is directly connected to the BMS 306, and can quickly respond to an input of the BMS 306. In embodiments of this application, a control delay of assisted driving or autonomous driving can be further improved, to quickly control the first motor, thereby achieving good safety.

In an embodiment, the vehicle further includes an electronic stability program (Electronic Stability Program, ESP) 307, and the ESP 307 is connected to the input end of the controller 3011. The controller receives a torque signal sent by the ESP 307, where the torque signal carries a limited torque of the ESP 307, the limited torque of the ESP 307 is related to the slip rate of the vehicle, and the slip rate of the vehicle is obtained by the ESP 307 through calculation based on an actual acceleration of the vehicle, a yaw angle signal, and a wheel velocity signal. In this case, the controller 3011 may use a torque sent by the ESP 307 as the limited torque.

In embodiments of this application, the controller 3011 is directly connected to the ESP 307, to quickly respond to an input of the ESP 307. In embodiments of this application, a control delay of assisted driving or autonomous driving can be further improved, to quickly control the first motor, thereby achieving good safety.

Optionally, the controller 3011 determines the limited torque in this application based on the power signal sent by the BMS 306 and the torque signal sent by the ESP 307. For example, the controller 3011 obtains a limited torque 1 through calculation based on the power signal sent by the BMS 306, and the controller 3011 obtains a limited torque 2 based on the torque signal sent by the ESP 307. In this case, the controller 3011 may use a smaller value between the limited torque 1 and the limited torque 2 as the limited torque in this application.

In an embodiment, the vehicle further includes a thermal management system (Thermal Management System, TMS) 308, and the TMS 308 is connected to the input end of the controller 3011. The controller 3011 receives a power signal sent by the TMS 308, where the power signal sent by the TMS 308 carries limited power of the TMS 308. It may be understood that the TMS 308 is connected to a plurality of temperature sensors, and the temperature sensors may be disposed as required, for example, disposed on a three-phase stator winding of the first motor 3013, or disposed on a circuit board of the controller 3011. That is, the limited power of the TMS 308 may be related to a temperature of any device in the vehicle. The controller 3011 may obtain the limited torque through calculation according to Formula 6. In this case, the controller 3011 is directly connected to the TMS 308, and can quickly respond to an input of the TMS 308. In embodiments of this application, a control delay of assisted driving or autonomous driving can be further improved, to quickly control the first motor, thereby achieving good safety.

Optionally, the controller 3011 determines the limited torque in this application based on the power signal sent by the BMS 306, the torque signal sent by the ESP 307, and the power signal sent by the TMS 308. For example, the controller 3011 obtains a limited torque 1 through calculation based on the power signal sent by the BMS 306, obtains a limited torque 2 through calculation based on the torque signal sent by the ESP 307, and obtains a limited torque 3 through calculation based on the power signal sent by the TMS 308. In this case, the controller 3011 may use a minimum value among the limited torque 1, the limited torque 2, and the limited torque 3 as the limited torque in this application.

During specific implementation, after obtaining the limited torque, the controller 3011 compares a value of the limited torque and a value of the target torque.

For example, when determining that the target torque is less than or equal to the limited torque, the controller 3011 controls, based on the target torque, the current output by the first inverter circuit 3012 to the first motor 3013 to be the first target current. Alternatively, when determining that the target torque is less than or equal to the limited torque, the controller 3011 may divide the target torque into the first target sub-torque and the second target sub-torque, control, based on the first target sub-torque, the current output by the first inverter circuit 3012 to the first motor 3013 to be the fourth target current, and send a compensation request to the secondary controller 3014, where the compensation request carries the second target sub-torque. When receiving the torque compensation request, the secondary controller 3014 controls, based on the second target sub-torque, the current output by the second inverter circuit 3015 to be the second target current. To be specific, when the target torque is less than or equal to the limited torque, the controller 3011 may control the output current of the first inverter circuit 3012 to be the first target current. In this case, the target torque is provided by the first motor 3013. Alternatively, the controller 3011 may perform torque allocation on the target torque. In this case, the target torque is provided by both the first motor 3013 and the second motor 3016.

When determining that the target torque is greater than the limited torque, the controller 3011 divides the target torque into the first target sub-torque and the second target sub-torque, controls, based on the first target sub-torque, the current output by the first inverter circuit 3012 to the first motor 3013 to be the fourth target current, and sends the compensation request to the secondary controller 3014, where the compensation request carries the second target sub-torque. When receiving the torque compensation request, the secondary controller 3014 controls, based on the second target sub-torque, the current output by the second inverter circuit 3015 to be the second target current. To be specific, when the target torque is greater than the limited torque, the controller 3011 performs torque allocation on the target torque. In this case, the target torque is provided by both the first motor 3013 and the second motor 3016.

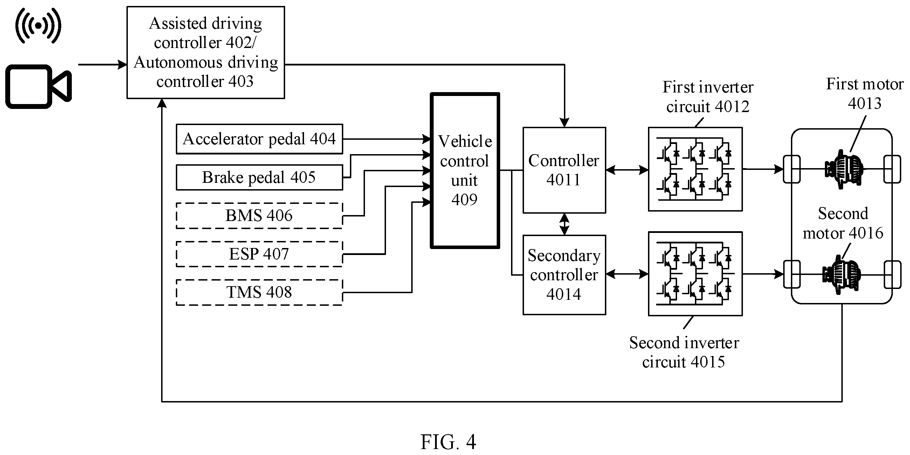

In an embodiment, as shown in FIG. 4, FIG. 4 is a block diagram of another structure of a vehicle according to an embodiment of this application. As shown in FIG. 4, the vehicle may include a controller 4011, a first inverter circuit 4012, a first motor 4013, a vehicle control unit 409, and an assisted driving controller 402/autonomous driving controller 403.

It can be learned that a difference between the block diagram of the structure of the vehicle shown in FIG. 4 and the block diagram of the structure of the vehicle shown in FIG. 3 lies in that the controller 4011 of the vehicle is added in FIG. 4.

For the assisted driving controller 402, refer to the description of the assisted driving controller 302 in the embodiment described with reference to FIG. 3. For the autonomous driving controller 403, refer to the description of the autonomous driving controller 303 in the embodiment described with reference to FIG. 3. Details are not described herein again.

For a specific implementation in which the controller 4011 calculates the target torque based on the target speed and the target acceleration, refer to the foregoing description of the controller 3011 in the embodiment described with reference to FIG. 3.

Different from the controller 3011 described in FIG. 3, the controller 4011 in this embodiment of this application is not directly connected to an accelerator pedal 404, a brake pedal 405, a BMS 406, an ESP 407, or a TMS 408.

In this case, the brake pedal 405 is connected to an input end of the vehicle control unit 409. When detecting a brake signal, the vehicle control unit 409 sends the brake signal to the controller 4011, so that the controller 4011 may indicate the assisted driving controller 402 or the autonomous driving controller 403 to stop sending a speed adjustment signal. That is, the vehicle exits an assisted driving mode or an autonomous driving mode. Alternatively, when detecting a brake signal, the controller 4011 stops responding to a speed adjustment signal sent by the assisted driving controller 402 or the autonomous driving controller 403. In other words, it may be understood as that the speed adjustment signal sent by the assisted driving controller 402 or the autonomous driving controller 403 is invalid.

The accelerator pedal 404 is connected to the input end of the vehicle control unit 409. The vehicle control unit 409 may calculate an input torque of a driver based on an acceleration signal determined based on position information of the accelerator pedal 404, and send the input torque of the driver to the controller 4011, so that the controller 4011 can superimpose the input torque of the driver on the basis of a target torque obtained through calculation.

In an embodiment, the BMS 406 is connected to the input end of the vehicle control unit 409, and the vehicle control unit 409 receives a power signal sent by the BMS 406. The power signal sent by the BMS 406 carries limited power of the BMS 406, and the limited power of the BMS 406 is related to a temperature, remaining power, and the like of a power battery. The controller 4011 may obtain a limited torque through calculation according to Formula 6, and send the limited torque to the controller 4011.

In an embodiment, the ESP 407 is connected to the input end of the vehicle control unit 409. The vehicle control unit 409 receives a torque signal sent by the ESP 407, where the torque signal carries a limited torque of the ESP 407, the limited torque of the ESP 407 is related to a slip rate of the vehicle, and the slip rate of the vehicle is obtained by the ESP 407 through calculation based on an actual acceleration of the vehicle, a yaw angle signal, and a wheel velocity signal. In this case, the vehicle control unit 409 may send, to the controller 4011, the limited torque carried in the torque signal.

Optionally, the vehicle control unit 409 determines, based on the power signal sent by the BMS 406 and the torque signal sent by the ESP 407, a signal to be sent to the controller 4011. For example, the vehicle control unit 409 obtains a limited torque 1 through calculation based on the power signal sent by the BMS 406, and obtains a limited torque 2 based on the torque signal sent by the ESP 407. In this case, the vehicle control unit 409 may send a smaller value between the limited torque 1 and the limited torque 2 to the controller 4011.

In an embodiment, the TMS 408 is connected to the input end of the vehicle control unit 409. The vehicle control unit 409 receives a power signal sent by the TMS 408, where the power signal sent by the TMS 408 carries limited power of the TMS 408. It may be understood that the TMS 408 is connected to a plurality of temperature sensors, and the temperature sensors may be disposed as required, for example, disposed on a three-phase stator winding of the first motor 4013, or disposed on a circuit board of the controller 4011. That is, the limited power of the TMS 408 may be related to a temperature of any device in the vehicle. The vehicle control unit 409 may obtain a limited torque through calculation according to Formula 6, and send the limited torque to the controller 4011.

Optionally, the vehicle control unit 409 determines the limited torque in this application based on the power signal sent by the BMS 406, the torque signal sent by the ESP 407, and the power signal sent by the TMS 408. For example, the vehicle control unit 409 obtains a limited torque 1 through calculation based on the power signal sent by the BMS 406, obtains a limited torque 2 through calculation based on the torque signal sent by the ESP 407, and obtains a limited torque 3 through calculation based on the power signal sent by the TMS 408. In this case, the vehicle control unit 409 may send a minimum value among the limited torque 1, the limited torque 2, and the limited torque 3 to the controller 4011.

In conclusion, in this embodiment of this application, the vehicle control unit 409 is added, and the vehicle control unit 409 may calculate the limited torque. It may be understood that when the vehicle exits the assisted driving mode or the autonomous driving mode, the vehicle control unit 409 may take over torque calculation and torque allocation.

In another embodiment, the controller 4011 may directly simultaneously or separately receive one or more of the speed adjustment signal sent by the assisted driving controller 402/autonomous driving controller 403, the acceleration signal triggered by the accelerator pedal 404, the brake signal triggered by the brake pedal 405, the torque signal sent by the vehicle control unit 409, the power signal sent by the BMS 406, the torque signal sent by the ESP 407, and the power signal sent by the TMS 408, and the controller 4011 correspondingly controls the first inverter circuit 4012 to adjust a current output to the first motor 4013. In an embodiment, the controller 4011 may further control the secondary controller 4014 to adjust a current output by the second inverter circuit 4015 to the second motor 4016.

The controller 4011 provided in this embodiment of this application may directly receive one or more signals sent or triggered by the assisted driving controller 402/autonomous driving controller 403, the accelerator pedal 404, the brake pedal 405, the BMS 406, the ESP 407, the TMS 408, or the vehicle control unit 409, so that the controller 4011 can quickly control an output torque of the first motor by controlling the output current of the inverter circuit based on the signal, thereby reducing a control delay and improving safety.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A controller of a motor control module, wherein a communication end of the controller is configured to connect to an assisted driving controller or an autonomous driving controller, and an output end of the controller is configured to output a control signal to control an inverter circuit in the motor control module; and the controller is configured to:

    receive a speed adjustment signal sent by the assisted driving controller or the autonomous driving controller; and
    in response to the speed adjustment signal, control the inverter circuit to adjust a current output to a first motor.

2.  The controller according to claim 1, wherein the communication end of the controller is further configured to control a secondary controller; and the controller is further configured to:
    in response to the speed adjustment signal, control the secondary controller to adjust a current that is output by an inverter circuit connected to the secondary controller to a second motor.

3.  The controller according to either claim 1 or claim 2, wherein an input end of the controller is configured to receive a brake signal; and the controller is further configured to:
    in response to the brake signal, indicate the assisted driving controller or the autonomous driving controller to stop sending the speed adjustment signal; or in response to the brake signal, stop responding to the speed adjustment signal sent by the assisted driving controller or the autonomous driving controller.

4.  The controller according to any one of claims 1 to 3, wherein the input end of the controller is configured to receive an acceleration signal; and the controller is configured to:
    in response to the speed adjustment signal and the acceleration signal, control the inverter circuit to adjust the current output to the first motor.

5.  The controller according to any one of claims 1 to 4, wherein the communication end of the controller is configured to connect to a vehicle control unit; and the controller is configured to:

    receive a torque signal sent by the vehicle control unit; and
    in response to the speed adjustment signal and the torque signal sent by the vehicle control unit, control the inverter circuit to adjust the current output to the first motor.

6.  The controller according to any one of claims 1 to 5, wherein the input end of the controller is configured to connect to a battery management system; and the controller is configured to:

    receive a power signal sent by the battery management system; and
    in response to the speed adjustment signal and the power signal sent by the battery management system, control the inverter circuit to adjust the current output to the first motor.

7.  The controller according to any one of claims 1 to 5, wherein the input end of the controller is configured to connect to an electronic stability program; and the controller is configured to:

    receive a torque signal sent by the electronic stability program; and
    in response to the speed adjustment signal and the torque signal sent by the electronic stability program, control the inverter circuit to adjust the current output to the first motor.

8.  The controller according to any one of claims 1 to 5, wherein the input end of the controller is configured to connect to a thermal management system; and the controller is configured to:

    receive a power signal sent by the thermal management system; and
    in response to the speed adjustment signal and the power signal sent by the thermal management system, control the inverter circuit to adjust the current output to the first motor.

9.  A motor control method, wherein the control method is applied to a controller in a motor control module, a communication end of the controller is configured to connect to an assisted driving controller or an autonomous driving controller, and an output end of the controller is configured to output a control signal to control an inverter circuit in the motor control module; and

the control method comprises:

receiving, by the controller, a speed adjustment signal sent by the assisted driving controller or the autonomous driving controller, wherein the speed adjustment signal comprises a target speed and a target acceleration;

calculating, by the controller, a target torque based on the target speed and the target acceleration; and

controlling, by the controller based on the target torque and a relationship between a torque and a current, a current output by the inverter circuit to a first motor to be a first target current.

10. The control method according to claim 9, wherein the controlling, based on the target torque, a current output by the inverter circuit to a first motor to be a first target current comprises:

in response to that the target torque is less than or equal to a limited torque, controlling, based on the target torque, the current output by the inverter circuit to the first motor to be the first target current.

11. The control method according to either claim 9 or claim 10, wherein the communication end of the controller is further configured to connect to a secondary controller; and

the control method further comprises:

dividing, by the controller, the target torque into a first target sub-torque and a second target sub-torque;

controlling, by the controller based on the first target sub-torque and the relationship between a torque and a current, the current output by the inverter circuit to the first motor to be a fourth target current; and

sending, by the controller, a compensation request to the secondary controller, wherein the compensation request indicates the secondary controller to control, based on the second target sub-torque, an inverter circuit connected to the secondary controller to output a second target current to a second motor.

12. The control method according to any one of claims 9 to 11, wherein when the inverter circuit outputs the first target current to the first motor, the first motor outputs a first torque;

the receiving, by the controller, a speed adjustment signal sent by the assisted driving controller or the autonomous driving controller comprises:

receiving, according to a preset periodicity, the speed adjustment signal sent by the assisted driving controller or the autonomous driving controller; and

the controlling, based on the target torque, a current output by the inverter circuit to a first motor to be a first target current comprises:

controlling, in the preset periodicity based on the first torque and the target torque, the current output by the inverter circuit to the first motor to be a fifth target current.

13. The control method according to claim 12, wherein when the inverter circuit outputs the fifth target current to the first motor, the first motor outputs a second torque, wherein

the first torque is in a first preset interval of the target torque, the second torque is in a second preset interval of the target torque, and a range of the second preset interval is less than a range of the first preset interval.

14. An electric drive system, wherein the electric drive system comprises a motor control module and a first motor, and the motor control module comprises an inverter circuit and the controller according to any one of claims 1 to 8.

15. A vehicle, wherein the vehicle comprises a power battery and the electric drive system according to claim 14, and the power battery is connected to an input end of an inverter circuit.

Vehicle 10

FIG. 1

Electric drive system 101

| Power battery 102 | | Inverter circuit 1012 | | First motor 1013 |

Assisted driving controller 203

Autonomous driving controller 204

Controller 1011

FIG. 2

FIG. 3

FIG. 4

EP 4 563 395 A1

## INTERNATIONAL SEARCH REPORT

| International application No. |
| --- |
| **PCT/CN2023/111025** |

| A. | CLASSIFICATION OF SUBJECT MATTER |
| --- | --- |

B60L15/20(2006.01)i; H02P23/00(2016.01)i; H02P27/06(2006.01)i; H02P29/40(2016.01)i

According to International Patent Classification (IPC) or to both national classification and IPC

| B. | FIELDS SEARCHED |
| --- | --- |

Minimum documentation searched (classification system followed by classification symbols)

    IPC：B60L,H02P,B60W

Documentation searched other than minimum documentation to the extent that such documents are included in the fields searched

Electronic data base consulted during the international search (name of data base and, where practicable, search terms used)

    CNTXT; ENTXT; VEN; CNKI: 控制器, 电机, 逆变, 辅助驾驶, 自动驾驶, 时延, controller, motor, inverter, auxiliary driving, automatic driving, time delay.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115520032 A (HUAWEI DIGITAL POWER TECHNOLOGIES CO., LTD.) 27 December 2022 (2022-12-27) <br> description, paragraphs [0069]-[0147], and figures 1-4 | 1-15 |
| X | CN 114590251 A (JIANGLING MOTORS CO., LTD.) 07 June 2022 (2022-06-07) <br> description, paragraphs [0048]-[0098], and figures 1-3 | 1-2, 9-10, 14-15 |
| A | CN 115009037 A (CHANGZHOU XINGYU AUTOMOTIVE LIGHTING SYSTEMS CO., LTD.) 06 September 2022 (2022-09-06) <br> entire document | 1-15 |
| A | CN 209103151 U (CH-AUTO TECHNOLOGY CORPORATION LTD.) 12 July 2019 (2019-07-12) <br> entire document | 1-15 |
| A | CN 108621862 A (HUAWEI TECHNOLOGIES CO., LTD.) 09 October 2018 (2018-10-09) <br> entire document | 1-15 |
| A | CN 112937545 A (JIANGSU UNIVERSITY) 11 June 2021 (2021-06-11) <br> entire document | 1-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 October 2023** | **09 November 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/111025**

### C.    DOCUMENTS CONSIDERED TO BE RELEVANT

| Category* | Citation of document, with indication, where appropriate, of the relevant passages | Relevant to claim No. |
|---|---|---|
| A | US 2021323415 A1 (CARVELL et al.) 21 October 2021 (2021-10-21)<br>    entire document | 1-15 |
| A | US 2020023890 A1 (Kawamura et al.) 23 January 2020 (2020-01-23)<br>    entire document | 1-15 |
| A | WO 2017145829 A1 (PANASONIC INTELLECTUAL PROPERTY MANAGEMENT CO.,<br>LTD.) 31 August 2017 (2017-08-31)<br>    entire document | 1-15 |

Form PCT/ISA/210 (second sheet) (July 2022)

**INTERNATIONAL SEARCH REPORT**
Information on patent family members

International application No.

**PCT/CN2023/111025**

| Patent document cited in search report | | | Publication date (day/month/year) | Patent family member(s) | | | Publication date (day/month/year) |
|---|---|---|---|---|---|---|---|
| CN | 115520032 | A | 27 December 2022 | None | | | |
| CN | 114590251 | A | 07 June 2022 | None | | | |
| CN | 115009037 | A | 06 September 2022 | None | | | |
| CN | 209103151 | U | 12 July 2019 | None | | | |
| CN | 108621862 | A | 09 October 2018 | None | | | |
| CN | 112937545 | A | 11 June 2021 | None | | | |
| US | 2021323415 | A1 | 21 October 2021 | WO | 2021216228 | A1 | 28 October 2021 |
| | | | | EP | 4122094 | A1 | 25 January 2023 |
| | | | | JP | 2023523183 | A | 02 June 2023 |
| | | | | KR | 20230004705 | A | 06 January 2023 |
| US | 2020023890 | A1 | 23 January 2020 | EP | 3597508 | A2 | 22 January 2020 |
| | | | | JP | 2020014347 | A | 23 January 2020 |
| WO | 2017145829 | A1 | 31 August 2017 | JP | 2017153188 | A | 31 August 2017 |

Form PCT/ISA/210 (patent family annex) (July 2022)

**EP 4 563 395 A1**

**Patent documents cited in the description**

- CN 202211214393